# EUROPEAN PATENT SPECIFICATION

(11) **EP 4 410 454 B1**
(45) Date of publication and mention of the grant of the patent: **13.08.2025**
(21) Application number: 23154219.2
(22) Date of filing: 31.01.2023
(51) Int. Cl.: B22F 10/28, B22F 10/31, B22F 10/85, B22F 12/90, B29C 64/153, B29C 64/393, B33Y 10/00, B33Y 30/00, B33Y 50/02, B22F 10/366

(54) **METHOD FOR CALIBRATING AT LEAST ONE BEAM SCANNER IN A MANUFACTURING DEVICE, METHOD FOR ADDITIVELY MANUFACTURING AN OBJECT FROM A POWDER MATERIAL, AND MANUFACTURING DEVICE**
VERFAHREN ZUM KALIBRIEREN MINDESTENS EINES STRAHLSCANNERS IN EINER FERTIGUNGSVORRICHTUNG, VERFAHREN ZUM GENERATIVEN FERTIGEN EINES OBJEKTS AUS EINEM PULVERMATERIAL UND FERTIGUNGSVORRICHTUNG
PROCÉDÉ D'ÉTALONNAGE D'AU MOINS UN SCANNER À FAISCEAU DANS UN DISPOSITIF DE FABRICATION, PROCÉDÉ DE FABRICATION ADDITIVE D'UN OBJET À PARTIR D'UN MATÉRIAU PULVÉRULENT ET DISPOSITIF DE FABRICATION

(43) Date of publication of application: 07.08.2024
(73) Proprietor: TRUMPF Additive Manufacturing Italia S.r.l., 36015 Schio (VI) (IT)
(72) Inventor: Michieli, Niccolò, 36015 Schio (IT); Mantoan, Elia, 36036 Torrebelvicino (IT)
(74) Representative: Trumpf Patentabteilung

(56) References cited:
- EP-A1- 3 907 021
- BARTLETT JAMISON L. ET AL: "Revealing mechanisms of residual stress development in additive manufacturing via digital image correlation", ADDITIVE MANUFACTURING, vol. 22, 24 April 2018 (2018-04-24), NL, pages 1 - 12, XP093060448, ISSN: 2214-8604, DOI: 10.1016/j.addma.2018.04.025
- HAERI SINA ET AL: "Analysis of radiation pressure and aerodynamic forces acting on powder grains in powder-based additive manufacturing", POWDER TECHNOLOGY, vol. 368, 17 April 2020 (2020-04-17), Basel (CH), pages 125 - 129, XP093060446, ISSN: 0032-5910, DOI: 10.1016/j.powtec.2020.04.031

## Description

The invention relates to a method for calibrating at least one beam scanner in a manufacturing device for additively manufacturing an object from a powder material, a method and a manufacturing device for additively manufacturing at least one object from a powder material.

In an additive manufacturing device, each energy beam of at least one energy beam available for selectively solidifying powder material has its own frame of reference or, in other words, coordinate system. If there are more than one energy beams, it is highly desirable to calibrate the different reference frames attached to the energy beams with respect to each other. Moreover, for each energy beam taken alone it may be desirable to calibrate its reference frame with respect to at least one of an apparatus-coordinate system of the manufacturing device, and a predetermined marker-geometry, e.g. of a preform arranged in a working area of the manufacturing device. A reference frame of an energy beam as understood herein is a reference frame assigned to a beam scanner which is arranged and adapted to scan the energy beam over a scan zone. Thus, calibrating a reference frame of an energy beam means calibrating the reference frame assigned to the respective beam scanner, or, in short, calibrating the respective beam scanner. Different methods have been suggested for calibrating energy beams: some approaches make use of physical and/or chemical transformations of the powder material induced by an energy beam, such as melting a predefined pattern in the powder material; other approaches detect scattered emission from the powder material or from dedicated objects placed in the working area; still other approaches use dedicated detectors or sensors placed directly in the working area. However, each of these approaches suffer from severe drawbacks: transforming the powder material physically and/or chemically comes with a waste of time and material, thus deteriorating the productivity of the manufacturing process, further, calibration can only be carried out inside the working area; detection of scattered emission strongly depends on the properties of the powder material used and requires dedicated optical sensors sensitive at specific wavelength ranges; finally, detection of the energy beam by a detector or sensor directly placed in the working area is cumbersome and needs a lot of otherwise valuable process time.

EP 3 907 021 A1 discloses a method of automated alignment of scanning optics, which includes the steps: irradiating an object area of a layer of a powdered material provided on a building platform with at least one irradiation beam; irradiating a calibration area of the layer of the powdered material with at least one irradiation beam; guiding the first irradiation beam with the first scanning optic over the intermediate top face and thereby melting a first calibration pattern into the intermediate top face; guiding the second irradiation beam with the second scanning optic over the intermediate top face and thereby melting a second calibration pattern into the intermediate top face; acquiring at least one image of the intermediate top face; using the at least one image, identifying image points related to the geometrical features of the calibration patterns; from the image points, deriving a spatial offset between the second geometrical features; and aligning at least one of scanning optic under consideration of the spatial offset.

Bartlett Jamison L. ET AL: "Revealing mechanisms of residual stress development in additive manufacturing via digital image correlation", Additive Manufacturing, vol. 22, 1 August 2018 (2018-08-01), pages 1-12, XP93060448, NL ISSN: 2214-8604, DOI: 10.1016/j.addma.2018.04.025 discloses that the severe thermal gradients associated with selective laser melting (SLM) additive manufacturing (AM) generate large residual stresses (RS) that geometrically distort and otherwise alter the performance of printed parts. It has been developed a non-destructive framework for RS measurement in SLM parts using three-dimensional digital image correlation (3D-DIC) to capture in situ surface distortion. A two-dimensional analytical model was developed to convert DIC surface curvature measurements to estimates of in-plane residual stresses. Experimental validation using stainless steel 316 L "inverted-cone" parts demonstrated that residual stress varied across the surface of the printed part, and strongly interacted with the component geometry. The 3D-DIC based RS measurements were validated by X-ray diffraction (XRD), with an average error of 6% between measured and analytically derived stresses. Systematic variation in RS was attributed to the sector-based laser raster strategy, which was supported by complementary finite element calculations. Calculations showed that the heterogeneous RS distribution in the parts emerged from the sequential re-heating and cooling of the new surface, and changed dynamically between layers.

Haeri Sina ET AL: "Analysis of radiation pressure and aerodynamic forces acting on powder grains in powder-based additive manufacturing", Powder Technology, vol. 368, 1 May 2020 (2020-05-01), pages 125-129, XP93060446, Basel (CH) ISSN: 0032-5910, DOI: 10.1016/j.powtec.2020.04.031 discloses that the selection of process parameters is an important step in Powder-Based Additive Manufacturing (PBAM) of metals. In this letter, it shows the importance of the laser induced force (radiation pressure) on the powder dynamics. Generalised Lorenz-Mie theory has been employed to accurately estimate the radiation pressure and it is shown that its magnitude is significant in comparison to various aerodynamic forces and the grains weight, hence, can significantly contribute to denudation and spatter observed in the manufacturing process. Furthermore, the importance of compressibility and rarefaction effects on the magnitude of drag and lift forces that a particle experiences is demonstrated by estimating the Ma and Kn numbers under process conditions, which directly impact the powder dynamics.

It is therefore an object of the invention to provide a method for calibrating at least one beam scanner in a manufacturing device for additively manufacturing an object from a powder material, a method and a manufacturing device for additively manufacturing at least one object from a powder material which at least in part overcome the drawbacks identified above.

This object is achieved by providing the present technical teachings, in particular the teachings of the independent claims as well as the teachings of the dependent claims and the preferred embodiments disclosed in the description.

According to a first aspect, the object is in particular achieved by providing a method for - in particular automatically - calibrating at least one beam scanner in a manufacturing device for additively manufacturing an object from a powder material - also referred to as a calibration method -, comprising the steps of: a) taking a first image of a detection region covered with a powder material in the manufacturing device; b) controlling the at least one beam scanner to scan at least one energy beam along a predetermined scan path in the detection region, wherein a first power density of the at least one energy beam is chosen below a modification threshold of the powder material, such that the intrinsic physical and chemical properties of the powder material remain unchanged, such that at least one of a translational and an angular position of single grains of the powder material is changed; c) taking a second image of the detection region; d) comparing the first image and the second image and obtaining a comparative result, and e) calibrating the at least one beam scanner on the basis of the comparative result, wherein the first image and the second image are taken with a resolution in the order of magnitude of an average size of a grain of the powder material.

Mainly in this way, advantageously, it is possible to detect localised intensity values at the sites of individual powder grains. Thus, in particular by comparing the first image and the second image pixel-by-pixel, the comparative result comprises information about for which pixels the intensity remains the same, due to a same position (location and/or orientation) of the respective powder grains, and for which pixels the intensity has changed due to a changed position of the respective powder grains. Thus, the predetermined scan path is clearly disclosed in the comparative result. Advantageously, the method according to the invention is extremely fast, thus allowing for a very high productivity of the manufacturing process, does at least almost not depend on the properties of the specific powder material used, and does neither physically nor chemically transform the powder material, such that there is no waste of material at all.

In particular, the at least one beam scanner is arranged and adapted to scan or displace the at least one energy beam in a scan zone, wherein the scan zone is an area defined and delimited by the ability of the beam scanner to displace the at least one energy beam. The scan zone at least partially overlaps with or comprises a working area of the manufacturing device, wherein the working area is a region where a product may be built from the powder material. In particular, the scan zone may be larger than or at least partially be located outside the working area.

In particular, the predetermined scan path is a path along which the at least one energy beam is displaced in the detection region. The predetermined scan path may be interrupted or composed from different unconnected sections, wherein the energy beam in particular might jump from section to section, or in other words be switched off during certain parts of a beam scanner displacement resulting in the energy beam travelling along the predetermined scan path. In particular, the predetermined scan path may have the shape of at least one of a line, in particular a straight line or a curved line, a plurality of connected or unconnected lines, a cross, a circle, a star, and any other suitable shape or combination of shapes.

In particular, the detection region may at least partially or completely overlap with the scan zone. In particular, the scan zone may comprise the detection region. Additionally or in the alternative, the detection region may at least partially or completely overlap with the working area. In particular, the detection region may be arranged outside the working area, inside the working area, or partially outside and partially inside the working area.

In particular, the first power density is a calibration power density used for calibrating the at least one beam scanner. The modification threshold in particular is a predetermined value of the power density of the energy beam, below which the powder material will not be physically and/or chemically transformed or modified, in particular below which an aggregate state and/or an oxidation state of the powder material will not be changed, in particular below which the powder material will not be melted. That the first power density is chosen below the modification threshold thus in particular means that the first power density is chosen such that the powder material is neither physically nor chemically transformed or modified, in particular not melted nor oxidised.

In particular, step b) is carried out such that the predetermined scan path is not recognisable or otherwise detectable neither in the first image nor in the second image. It is only the comparative result obtained by comparing the second image to the first image which reveals the predetermined scan path.

In particular, the at least one energy beam is selected from a group, consisting of an electromagnetic beam, in particular an optical working beam, in particular a laser beam, and a particle beam, in particular an electron beam. The optical working beam may be continuous or pulsed, in particular a continuous laser beam or a pulsed laser beam.

In an embodiment, in step b) radiation pressure is exerted on the powder material by the at least one energy beam. In theory, or in a most preferred embodiment, only radiation pressure is exerted on the powder material, and this, in particular, is the only effect of the at least one energy beam to the powder material in step b). In particular, and generally in practice, even if a certain amount of heat is transferred to the powder, the dominant effect still is the exertion of radiation pressure on the powder material, and this, in particular, is the only effect of the at least one energy beam to the powder material in step b) at least for all practical purposes, since the energy beam parameters, in particular beam power density and/or beam velocity, have been chosen to make heat contribution negligible. Radiation pressure may be exerted by an optical working beam as well as a particle beam. Due to the radiation pressure, coordinates of individual grains of the powder material in a detector-coordinate system of an imaging device used to take the first and second images may be changed, in particular, the grains may be dislocated and/or rotated. This leads to a change in the light reflection or light scattering properties of the powder material at the sites of the affected grains in the detection region, which in turn leads to changes in a detected intensity inside the imaging device for the respective sites of the detection region, such as changed intensities for pixels assigned to the affected grains.

Additionally or in the alternative, in step b) the scanning of the at least one energy beam is performed such that a second informational content of the second image equals a first informational content of the first image. In particular if the first image is taken of a freshly produced powder layer, comprising powder grains randomly distributed over the detection region, the first image comprises noise, and its first informational content is at least almost zero, in particular zero. The collectivity of specific locations (translational) and orientations (angular), generally referred to as "positions", of the individual powder grains in the detection region may be regarded as a specific distribution randomly drawn from a statistical population of possible distributions of the powder grain positions. Thus, the first image is taken from a first random distribution. In step b), the effect of the radiation pressure on the grains along the predetermined scan path is random, such that the positions (locations and/or orientations) of the affected grains are randomly changed. As a result, a second random distribution of the powder grain positions is produced during step b), which is different from the first random distribution, but may as well be regarded as randomly drawn from the statistical population of possible distributions. Thus, the second images taken of this second random distribution also comprises noise, i.e. its second informational content is the same as the informational content of the first image, namely at least almost zero, in particular zero. Moreover, since the effect of the radiation pressure on the grains along the predetermined scan path is random, it is in no way possible to recognise or otherwise reconstruct the predetermined scan path from the second image taken alone. However, since, as explained before, the detected intensities in the second image are different from the respective ones in the first image along the predetermined scan path but otherwise identical, since only the powder grains along the predetermined scan path have been affected, the predetermined scan path is revealed in the comparative result, i.e. by comparing the second image to the first image. Advantageously, with a method as suggested herein, it is possible to observe the predetermined scan path without modifying or transforming the powder material, but by only "pushing around" individual grains, without changing their intrinsic physical and/or chemical properties.

Additionally or in the alternative, in step b) the scanning of the at least one energy beam is performed such that an informational entropy of the powder material in the detection region is maintained. In particular, this means that the informational entropy of the powder material in the detection region is left unchanged in step b). Virtually no information or no information at all is contained neither in the first image nor in the second image, since no change in the informational entropy is affected in step b), as explained before. There is only information in the difference between the first image and the second image which can be extracted by comparing the images and obtaining the comparative result.

Additionally or in the alternative, in step b) the scanning of the at least one energy beam is performed such that the predetermined scan path is not visible in the second image. As also explained above, the only effect of the radiation pressure on the powder material is a random change in the positions of powder grains along the predetermined scan path. Since the powder grains are randomly disputed over the detection region, and there is no way to distinguish one random distribution from another, the predetermined scan path cannot be recognised in the second image. In this respect, it is also noteworthy that the powder grains itself are at least slightly different from each other in shape and size, such that even highly improbable, extreme-low-entropy distributions, where e.g. all powder grains would turn an identical side towards the imaging device, can principally be excluded, since there is nothing like an "identical side".

In an embodiment, in step b), the at least one beam scanner is controlled such that the scanning of the at least one energy beam along the predetermined scan path is performed multiple times. Thus, the effect of radiation pressure can be enhanced.

In an embodiment, the number of times for which the scanning in step b) is repeated is obtained by a calibration run carried out prior to step a), in particular in order to find a minimum number of repetitions yielding an adequate resolution with respect to a specific powder material.

As already mentioned, in particular, the powder material is neither melted nor oxidised. It is only the positions of the individual powder grains along the predetermined scan path which are - randomly - modified.

In an embodiment, the first power density of the at least one energy beam is chosen below 100 W, in particular below 90 W, in particular below 80 W, in particular below 70 W, in particular at 60 W or below 60 W, during step b). Particularly these power densities are well below the modification threshold, even independent from the specific choice of powder material.

In an embodiment, in step b) the at least one beam scanner is controlled to scan the at least one energy beam along the predetermined scan path with a velocity of at least 5000 mm/s, in particular at least 6000 mm/s, in particular at least 7000 mm/s, in particular at least 8000 mm/s or 8000 mm/s. In particular, these velocities are much higher than a typical velocity used for manufacturing, which ranges from 200 mm/s to 3000 mm/s, wherein 1400 mm/s is a typical value. The very high velocity preferably used in the method as disclosed herein, advantageously promotes the effect of radiation pressure. In particular, since thermal interaction between the energy beam and the powder material is slow compared to the effect of radiation pressure, the heat contribution can be made at least negligible by choosing a relatively high velocity at which the powder material is exposed to laser radiation only for a relatively small amount of time, such that the dominant effect will be the exertion of radiation pressure.

In an embodiment, in a step a0) prior to step a), a new powder layer is formed by - in particular randomly - distributing the powder material in the detection region. Thus, the powder material is freshly distributed over the detection region, such that in particular a first random distribution is produced prior to taking the first image. Then, by carrying out step b), a second random distribution is obtained, of which the second image is taken.

In an embodiment, the first image and the second image are compared on a pixel-by-pixel-basis, i.e. pixelwise, and an image structure is obtained from the pixels which are different in the second image as compared to the first image in the comparative result, and wherein the at least one beam scanner is calibrated on the basis of the obtained image structure. In particular, a comparison image is obtained by comparing the first image and the second image, and the image structure is recognisable, extractable, or visible in the comparison image. In particular, the image structure is an image of the predetermined scan path. By identifying a position, i.e. location and/or orientation, of the image structure in the detector-coordinate system of the imaging device, and comparing the identified position of the image structure in the detector-coordinate system with a predetermined expected position of the image structure or with a predetermined or observed position of another structure in the detector-coordinate system, the at least one beam scanner can be calibrated. In particular, calibration means obtaining a transformation from the identified position to the predetermined expected position of the image structure or to the predetermined or observed position of the other structure. Comparison of the identified position of the image structure with a predetermined or observed position of another structure may easily be done by projecting the image structure into the first image or the second image. A transformation with respect to a location is understood to be a translation; a transformation with respect to an orientation is understood to be a rotation. The transformation obtained for calibration may include one of a translation and a rotation, or both. Alternatively or in addition, the transformation may include scaling, in particular a scaling factor.

In the context of the present teachings, a position of the image structure in particular refers to at least one of coordinates of a centre, or centre-of-gravity, of the image structure, and an orientation (angular position) of at least predefined features of the image structure or the image structure as a whole, in particular both the centre coordinates and the angular position given in the detector-coordinate system.

In an embodiment, in step d), the first image and the second image are compared by subtracting the first image and the second image from each other, such that a difference image is obtained as the comparative result, wherein the at least one beam scanner is calibrated in step e) on the basis of the difference image. Thus, a fast and still very precise comparison can be carried out, which does not require intensive computing power.

Alternatively or additionally, in step d), the first image and the second image are compared by correlating the first image and the second image, such that a correlation image is obtained as the comparative result, wherein the at least one beam scanner is calibrated in step e) on the basis of the correlation image. In this way, a highly precise comparative result can be achieved. In an embodiment, in step d), the first image and the second image are compared by Normalized Cross Correlation.

In an embodiment, in step b), at least a first beam scanner is controlled to scan a first energy beam along a first predetermined scan path in the detection region, and at least a second beam scanner is controlled to scan a second energy beam along a second predetermined scan path in the detection region, wherein in step e), the first beam scanner and the second beam scanner are calibrated on the basis of the comparative result. In particular, the comparative result discloses both the first predetermined scan path and the second predetermined scan path which not only allows for a calibration of each of the beam scanners as taken alone, but also for calibrating the first beam scan and the second scanner with respect to each other, in particular by setting up a transformation from a first identified position of a first image structure assigned to the first predetermined scan path to a second identified position of a second image structure assigned to the second predetermined scan path. Alternatively, the transformation may be set up from a predetermined position of the second image structure relative to the first image structure to an observed position of the second image structure relative to the first image structure, or vice versa. For example, the first predetermined scan path and in consequence also the first image structure may have the shape of a first cross, and the second predetermined scan path and the second image structure may have the shape of a second cross. Then, for each cross a centre position, and in addition or in the alternative an angular position, may be calculated, and an offset between at least one of the centre positions and the angular positions of the crosses may be determined. At least one of the first beam scanner and the second beam scanner may then be calibrated such that the determined offset is minimised. Of course, in addition or in the alternative, it is possible to determine a scaling between the crosses, and to calibrate at least one of the first beam scanner and the second beam scanner with a corresponding scaling factor.

In an embodiment, more than two beam scanners may be calibrated with respect to each other.

In an embodiment, in step e), the at least one beam scanner is calibrated with respect to the detector-coordinate system of the imaging device. In particular, if the detector-coordinate system is fixed or calibrated in a known manner with respect to an apparatus-coordinate system of the manufacturing device, the at least one beam scanner may easily be calibrated with respect to the apparatus-coordinate system by performing the calibration with respect to the detector-coordinate system.

Additionally or in the alternative, in step e), the at least one beam scanner is calibrated with respect to an apparatus-coordinate system of the manufacturing device. Beyond the above explained known and preferably fixed relation between the detector-coordinate system and the apparatus-coordinate system, is also possible to observe at least one known geometrical structure of the apparatus within the first image and/or the second image and thus, in particular by projecting the image structure from the comparative result into the first image or the second image, obtain a calibration of the at least one beam scanner with respect to the apparatus-coordinate system by taking into account a geometrical relation between the image structure and the at least one observed geometrical structure of the apparatus.

Additionally or in the alternative, in step e), the at least one beam scanner is calibrated with respect to at least one predetermined marker-geometry in at least one of the first image and the second image. This is in particular desirable, if the manufacturing shall include building a new object above and in contact with a preform. The marker-geometry may be arranged on the preform, or be the preform itself. In the alternative, it is also possible to use a marker-geometry arranged at a fixed or movable part of the manufacturing device, in particular at a building platform comprising the working area. Thus, by calibrating the at least one beam scanner it is possible to take into account any slight misalignments and/or level-0, i.e. height, deviations of the building platform.

Additionally or in the alternative, in step e), the at least one first beam scanner and the at least one second beam scanner are calibrated with respect to each other. In particular, a transformation from a first identified position of a first image structure assigned to a first predetermined scan path of the first beam scanner can be set up to a second identified position of a second image structure assigned to a second predetermined scan path of the second beam scanner, in particular as explained in more detail above. Calibrating a plurality of beam scanners and thus energy beams with respect to each other advantageously allows for high quality manufacturing of even larger objects, or faster manufacturing of any objects, by using multiple energy beams to manufacture the same object. Thanks to the calibration, misalignments within a single object may be avoided or at least reduced.

In an embodiment, a time duration which elapses between taking the first image and taking the second image is in the order of or less than tens of milliseconds (ms), in particular at most 90 ms, or at most 80 ms, or at most 70 ms, or at most 60 ms, or at most 50 ms, or at most 40 ms, or at most 30 ms, or at most 20 ms. In an embodiment, the respective time duration is at least 1 ms, in particular at least 5 ms, in particular at least 10 ms. By choosing a relatively short time duration between taking the first image and the second image, any influence of disturbing effects acting on the powder material, such as flow of protection gas or air circulation which might inadvertently move powder grains, may be reduced, such considerably reducing noise in the comparative result. This is particularly advantageous for lighter powder materials such as light metals like, e.g., titanium and aluminium, in particular as compared with e.g., steel.

In an embodiment, in step b), the at least one beam scanner is controlled to scan the at least one energy beam along the predetermined scan path in the detection region outside a working area of the manufacturing device. Advantageously, the method disclosed herein is not confined to the working area, but can easily and with the option of gaining additional information be carried out outside the working area, in particular everywhere where a layer of powder material is present or can be produced in the manufacturing device. In particular, this is possible because the method disclosed herein does not depend on a layer thickness of the powder material layer, such that it can easily be carried out outside a powder bed. Since the powder material is neither physically nor chemically transformed or modified, no deterioration of the manufacturing apparatus is to be feared by carrying out the method outside the working area.

According to a second aspect, the object is in particular also achieved by providing a method for additively manufacturing at least one object from a powder material - also referred to as a manufacturing method -, comprising the following steps: carrying out the calibration method according to the invention or according to at least one of the embodiments as disclosed above, and controlling the at least one beam scanner to locally selectively irradiate a working area of the manufacturing device with the at least one energy beam, wherein a second power density of the at least one energy beam is chosen above a manufacturing threshold of the powder material, thereby manufacturing the at least one object. With respect to the manufacturing method, in particular the same advantages are achieved as explained above in relation to the calibration method.

In particular, the second power density is a manufacturing power density, i.e., a power density which is used for manufacturing an object from the powder material. The second power density is higher, in particular much higher, then the first power density. In other words, the first power density is lower, in particular much lower, than the second power density. In particular, the manufacturing threshold is a predetermined value of the power density of the energy beam, above which the powder material will be physically and/or chemically transformed or modified, in particular above which in particular an aggregate state of the powder material will be changed, in particular above which the powder material will be melted. That the first power density is chosen above the manufacturing threshold thus in particular means that the first power density is chosen such that the powder material is physically or chemically transformed or modified, in particular melted.

The manufacturing threshold may be identical to the modification threshold. However, in particular for safety reasons, the manufacturing threshold may also be higher than the modification threshold, or, vice versa, the modification threshold may be lower than the manufacturing threshold.

In particular, the second power density is chosen above the manufacturing threshold so as to solidify the powder material, in particular for manufacturing an object from the powder material.

In particular, by controlling the at least one beam scanner to locally selectively irradiate the working area of the manufacturing device with the at least one energy beam, thereby choosing the second power density of the at least one energy beam to be above the manufacturing threshold of the powder material, an object is manufactured from the powder material.

The different steps of the manufacturing method are not confined to a certain temporal order. It is possible, that in a first step, the calibration method is carried out in a first layer of powder material, and in a second, subsequent step, an object is manufactured layer-by-layer. However, it is also possible that at least one layer of powder material is irradiated by the energy beam in order to begin manufacturing of an object, and only after that, or even in between the process of irradiating the layer, the calibration method is carried out. Moreover, the calibration method can be carried out principally every time during the manufacturing process, in particular more than one time, in particular repeatedly.

In an embodiment, the calibration method is carried out in each n-th layer of powder material, where n is a predetermined integer, in particular at least 1 or greater than 1.

In another embodiment, the calibration method is carried out depending on at least one predetermined start parameter, in particular when the start parameter rises above or falls below a predetermined start-parameter threshold, or otherwise shows a predetermined starting behaviour. In particular, a temperature measured inside the manufacturing device may be used as a start parameter, since calibration of the at least one beam scanner may depend on temperature, in particular temperature dependent material expansion or contraction of parts of the manufacturing device.

In particular, since the calibration method only needs a very short time, wherein taking the images can be done extremely fast, and the at least one energy beam is scanned along its predetermined scan path with a scan velocity which is much higher than during manufacturing, the calibration method can well be carried out in each or almost each - e.g., every second - layer of the powder material without significant detrimental effect on the productivity of the manufacturing method; at the same time, the quality and preciseness of the produced objects will be particularly high thanks to frequent calibration.

Additive or generative manufacturing or production of an object or workpiece is understood to mean in particular a manufacturing process selected from a group, consisting of selective laser sintering, laser metal fusion (LMF), direct metal laser melting (DMLM), laser net shaping manufacturing (LNSM), selective electron beam melting ((S)EBM), and laser engineered net shaping (LENS). Accordingly, the manufacturing device disclosed below is particularly adapted to perform at least one of the aforementioned additive or generative manufacturing processes.

According to a third aspect, the object is in particular also achieved by providing a manufacturing device for additively manufacturing objects from a powder material, having at least one beam generating device adapted to generate at least one energy beam, at least one beam scanner adapted to scan at least one energy beam in a scan zone for locally selectively irradiating a working area with the at least one energy beam to produce an object from the powder material disposed in the working area, an imaging device arranged and adapted to take an image of at least a portion of the scan zone, i.e. a detection region, a control device operatively connected to the at least one beam scanner and the imaging device and adapted to control the at least one beam scanner and the imaging device, wherein the control device is adapted to control the imaging device and carry out at least one method, selected from a group consisting of a calibration method according to the invention or according to at least one of the embodiments as disclosed above, and a manufacturing method according to the invention or according to at least one of the embodiments as disclosed above. With respect to the manufacturing device, in particular the same advantages are achieved as explained above in relation to the calibration method or the manufacturing method.

As already mentioned, the scan zone may at least partially or completely overlap with - or comprise - the working area. Additionally or in the alternative, the detection region may at least partially or completely overlap with the scan zone. In particular, the scan zone comprises the detection region. The detection region may be arranged outside the working area, inside the working area, or partially outside and partially inside the working area.

In particular, the imaging device is an optical detection device.

In an embodiment, the imaging device is selected from a group consisting of a camera, a line scan camera, and a single-point detector. In particular, the imaging device may comprise at least one photosensitive surface element, also referred to as a photosite, pixel or sensel, a photosensitive diode, in particular a photodiode, or any other photosensitive device. In particular, the imaging device may comprise a single pixel, or a collection of pixels, e.g. a line of pixels or an array of pixels. If the imaging device is not able to capture the whole detection region at once, the imaging device may further comprise a scanning device, adapted and arranged to scan and thus capture the detection region sequentially, in particular line-by-line or point-by-point (pixelwise).

Additionally or in the alternative, the imaging device is selected from a group, consisting of a generic camera, a process monitoring camera of the manufacturing device, a dedicated calibration camera - in particular in addition to a process monitoring camera, and a web cam. While a generic camera and a web cam are particularly cheap implementations of the imaging device, using a process monitoring camera, which is adapted to monitor a manufacturing process of the apparatus, for the sake of calibration conveniently makes use of a device typically already implemented in the manufacturing device, such that no additional imaging device is needed, and the manufacturing device may be efficient and small. A dedicated calibration camera may be specifically adapted to the needs of the calibration, in particular with respect to a required resolution, and thus provide a particularly sensitive implementation. The imaging device may be integrated in a wall of the manufacturing device.

In particular, the at least one beam scanner is selected from a group, consisting of a galvanometer scanner, piezo scanner, polygon scanner, MEMS scanner, and a working head or processing head displaceable relative to the working area. The beam scanners proposed herein are particularly suitable for displacing the energy beams within the scan zone.

A working head or processing head displaceable relative to the scan zone is in particular understood to mean an integrated component of the manufacturing device, which has at least one radiation outlet for at least one energy beam, the integrated component, that is the working head, being displaceable as a whole relative to the scan zone along at least one displacement direction, preferably along two displacement directions perpendicular to each other. Such a working head can in particular be of portal design, or be guided by a robot. In particular, the working head can be designed as a robot hand of a robot.

In particular, the beam generating device is a laser, or comprises a plurality of lasers. The at least one energy beam then is advantageously generated as an intense beam of coherent electromagnetic radiation, in particular coherent light. In this respect, "irradiation" preferably means "exposure to light".

In particular, at least two energy beams of the plurality of energy beams are adapted to be displaced over the complete working area. In a particular embodiment, all energy beams are adapted to be displaced over the complete working area. In the alternative, not all the energy beams, but only a certain number of energy beams out of the plurality of energy beams are adapted to be displaced over the complete working area. In another embodiment, none of the energy beams is adapted to be displaced over the complete working area, but the energy beams, or at least a subset of energy beams, share a common irradiation area, in particular delimited by demarcation lines.

In an embodiment, the manufacturing device is adapted for selective laser sintering. Alternatively, or additionally, the manufacturing device is adapted for selective laser melting.

In particular, the powder material is a powder mixture. In an embodiment, a metallic powder or a ceramic powder can be used as the powder material.

In an embodiment, the control device is selected from a group consisting of a computer, in particular a personal computer (PC), a plug-in card or driver card, and an FPGA board. In a preferred embodiment, the control device is an RTC5 or RTC6 control card from SCANLAB GmbH, in particular in the embodiment currently available on the date determining the priority of the present teaching.

In a fourth aspect, the object is in particular also achieved by providing a computer program comprising instructions which, when the computer program is executed on a computing device, cause the computing device to carry out a calibration method according to the invention or according to at least one of the embodiments as disclosed above.

In addition, or in the alternative, the computer program comprises instructions which, when the computer program is executed on a computing device, cause the computing device to carry out a manufacturing method according to the invention or according to at least one of the embodiments as disclosed above. With respect to the computer program, in particular the same advantages are achieved as explained above in relation to the calibration method or to the manufacturing method or the manufacturing device.

The invention is explained below in further detail with reference to the drawing. In the drawing
- Figure 1: shows an embodiment of a manufacturing device;
- Figure 2: shows a first schematic representation of an embodiment of a calibration method for calibrating at least one beam scanner in the manufacturing device according to figure 1;
- Figure 3: shows a second schematic representation of the embodiment of the calibration method according to figure 2.

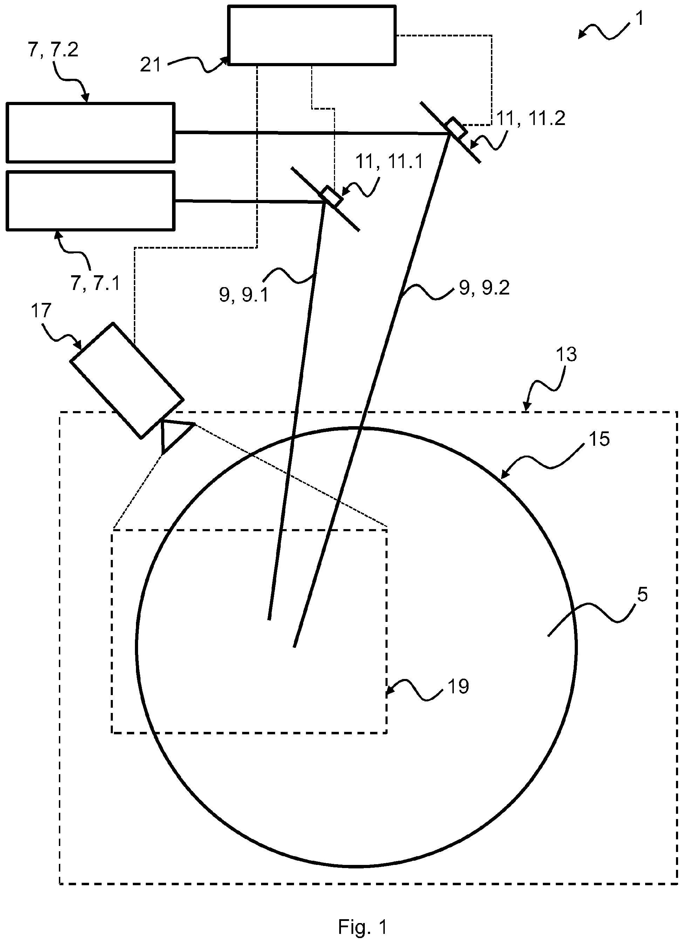

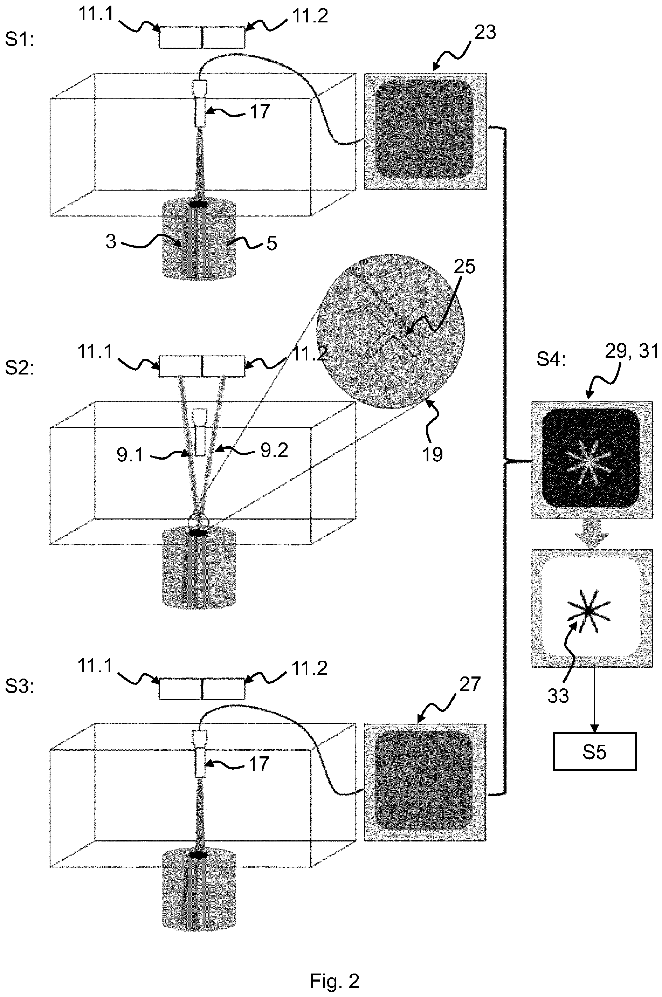

**Fig. 1** shows an embodiment of a manufacturing device 1 for additively manufacturing objects 3 - schematically shown in figure 2 - from a powder material 5.

The manufacturing device 1 has at least one beam generating device 7, preferably in the form of a laser, which is adapted to generate at least one energy beam 9, in particular a laser beam, in this case in particular a plurality of energy beams 9, and also at least one beam scanner 11, which is adapted to scan the at least one energy beam 9 in a scan zone 13 for locally selectively irradiating a working area 15 with the at least one energy beam 9, in order to produce the at least one object 3 from the powder material 5 arranged in the working area 15. In particular, the beam generating device 7 generates more than one energy beam 9, or the manufacturing device 1 has more than one beam generating devices 7 for generating a plurality of energy beams 9. Specifically shown in figure 1 are a first beam generating device 7.1 for generating a first energy beam 9.1 and a second beam generating device 7.2 for generating a second energy beam 9.2. Preferably, the manufacturing device 1 has a separate beam scanner 11 for each energy beam 9, namely a first beam scanner 11.1 for the first energy beam 9.1 and a second beam scanner 11.2 for the second energy beam 9.2. The manufacturing device 1 further comprises an imaging device 17, in particular a camera, which is arranged and adapted to take images of a detection region 19 as at least a portion of the scan zone 13. The manufacturing device 1 further comprises a control device 21, in particular designed as a computing device, which is operatively connected to the at least one beam scanner device 13 and preferably also to the at least one beam generating device 9 and is adapted to control the at least one beam scanner 11 and the imaging device 17. The control device 21 is adapted to carry out at least one method, selected from a group consisting of a calibration method, and a manufacturing method, both described in more detail below.

The scan zone 13 preferably at least partially or completely overlaps with the working area15, or - as in shown in figure 1 - comprises the working area 15. The detection region 19 preferably at least partially or completely overlaps with the scan zone 13. In particular - as shown in figure 1 -, the scan zone 13 comprises the detection region 19. The detection region 19 may be arranged outside the working area 15, inside the working area 15, or - as shown in figure 1 - partially outside and partially inside the working area 15.

The manufacturing device 1 is in particular adapted to manufacture the object 3 layer-by-layer from a plurality of powder material layers arranged in a layer sequence in time succession in the working area 15. For this purpose, the working area 15, in particular in the form of a powder bed, is arranged on a building platform, which is lowered step by step opposite to an upward direction in the course of the provision of the powder material layers in time sequence in the working area 15. The powder material 5 forming in each case a next powder material layer is conveyed by means of a coating device, designed in particular as a wiper or pusher, from a supply region of a supply cylinder not shown here into the working area 15 and smoothed by the coating device, so that a respective current powder material layer is provided. The powder material layer may well reach beyond the working area 15; in particular, the powder material 5 may cover at least the complete detection region 19, in particular the complete - or nearly the complete - scan zone 13. As the powder material 5 is successively selectively solidified locally in this way, powder material layer by powder material layer, by means of the at least one energy beam 9 in the working area 15, the object 3 is built up layer-by-layer.

**Fig. 2** shows a first schematic representation of an embodiment of a calibration method for calibrating at least one beam scanner 11 in the manufacturing device 1 according to figure 1.

The same or functionally equivalent elements are assigned the same reference numerals in all figures, such that reference is made in each case to the preceding explanations.

In the calibration method, preferably, in a first step S1, a first image 23 of the detection region 19 is taken by the imaging device 17. In a second step S2, the at least one beam scanner 11 is controlled by the control device 21 to scan the at least one energy beam 9 along a predetermined scan path 25 in the detection region 19, and at the same time a first power density of the at least one energy beam 9 is chosen below a modification threshold of the powder material 5. In a third step S3, a second image 27 of the detection region 19 is taken by the imaging device 17. In a fourth step S4, the first image 23 and the second image 27 are compared to each other, in particular on a pixel-by-pixel-basis, i.e. pixelwise, and a comparative result 29, in particular a comparison image 31, is obtained. In a fifth step S5 the at least one beam scanner 11 is calibrated on the basis of the comparative result 29.

The predetermined scan path 25 is not recognisable or otherwise detectable neither in the first image 23 nor in the second image 27. It is only in the comparative result 29, in particular in the comparison image 31, that a path image 33 of the predetermined scan path 25 is obtained. The comparison image 31 may be reworked or post-processed in order to emphasise the path image 33, e.g., by inverting or otherwise changing intensity values or colour values of the comparison image 31, as schematically shown in figure 2.

The first image 23 and the second image 27 preferably are taken with a resolution in the order of magnitude of an average grain size of the powder material. Thus, in particular, localised intensity values for the sites of the individual powder grains are detected in the images 23, 27.

Preferably, prior to the first step S1, a new powder layer is formed by - in particular randomly - distributing the powder material 5 in the detection region 19.

Preferably, the first image 23 and the second image 27 are compared by subtracting the first image 23 and the second image 27 from each other (in particular by applying the absolute value of the resulting difference pixel by pixel: Let's say a and b are the same pixels in the first and second image, respectively. Thus, it is the same pixel in the final image. Mathematically this could be written as |a-b|), such that the comparison image 31 is obtained as a difference image. Alternatively or additionally, the first image 23 and the second image 27 are compared by correlating the first image 23 and the second image 27, such that the comparison image 31 is obtained as a correlation image.

Preferably, in the second step S2, the first beam scanner 11.1 and the second beam scanner 11.2 are controlled to respectively scan the first energy beam 9.1 along a first predetermined scan path and the second energy beam 11.2 along a second predetermined scan path in the detection region 19, obtaining a combined predetermined scan path as the predetermined scan path 25, wherein in particular the - combined - predetermined scan path 25 comprises features from the first predetermined scan path, e.g., a first cross, and from the second predetermined scan path, e.g., a second cross. In the fifth step S5, the first beam scanner 11.1 and the second beam scanner 11.2 are calibrated on the basis of the comparative result 29. In particular, the comparison image 31 shows the path image 33 comprising both first image structures stemming from the first predetermined scan path and second image structures stemming from the second predetermined scan path.

In the fifth step S5, preferably the at least one beam scanner 11 is calibrated with respect to a detector-coordinate system of the imaging device 17. Additionally or in the alternative, the at least one beam scanner 11 is calibrated with respect to an apparatus-coordinate system of the manufacturing device 1. Additionally or in the alternative, the at least one beam scanner 11 is calibrated with respect to at least one predetermined marker-geometry in at least one of the first image 23 and the second image 27. Additionally or in the alternative, the at least one first beam scanner 11.1 and the at least one second beam scanner 11.2 are calibrated with respect to each other. The manufacturing device 1 may comprise a larger number of beam scanners 11 and energy beams 9, and a plurality of beam scanners 11 may be calibrated with respect to each other by carrying out the calibration method.

In the manufacturing method, preferably the calibration method is carried out in at least one calibration step, and in a manufacturing step the at least one beam scanner 11 is controlled to locally selectively irradiate the working area 15 with the at least one energy beam 9, where at the same time a second power density of the at least one energy beam 9 is chosen above a manufacturing threshold of the powder material 5, thereby manufacturing the at least one object 3.

The calibration step and the manufacturing step of the manufacturing method are not confined to a certain temporal order. It is possible, that first the calibration step is carried out in a first layer of powder material, and subsequently an object 3 is manufactured layer-by-layer in the manufacturing step. However, it is also possible that at least one layer of powder material 5 is irradiated by the at least one energy beam 9 in order to begin manufacturing of an object 3 in the manufacturing step, and only after that, or even in between the process of irradiating the layer, the calibration step is carried out. Moreover, the calibration step can be carried out principally every time during the manufacturing process, in particular more than one time, in particular repeatedly. In particular, the calibration step can be carried out a plurality of times, and the manufacturing step comprises a plurality of partial steps, at least one partial step per powder material layer, and the calibration steps and the partial steps may be in any temporal order, and even may be intertwined.

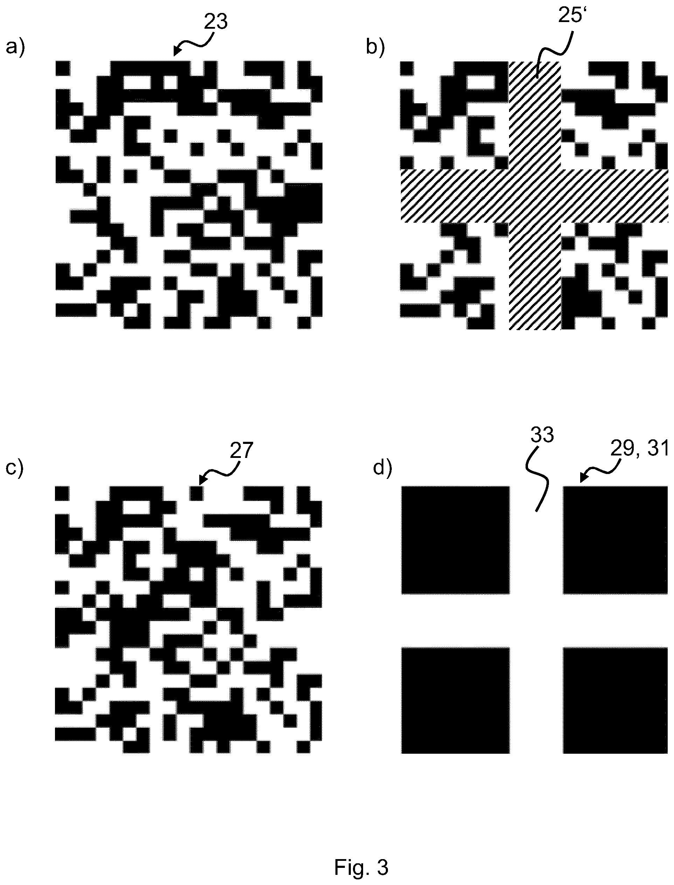

**Fig. 3** shows a second schematic representation of the embodiment of the calibration method according to figure 2.

On the basis of figure 3, the reasoning behind the calibration method shall be explained in more detail:
By providing a fresh powder material layer prior to the first step S1, a first random distribution of positions, i.e. locations and/or orientations, of powder grains of the powder material 5 is produced, such that the first image 23 shows random noise in terms of intensity. This is schematically shown at figure 3a) in a rather course schematic representation of the first image 23 of the detection region 19, where this schematic representation in the following is referred to as the first image 23, comprising an array of pixels having a first random intensity distribution. For the sake of simplicity, each pixel is either black or white, and one may consider that this can be obtained by introducing a certain intensity threshold, above which in particular a pixel will be white, and below which the pixel will be black. Exactly at the intensity threshold, the pixel may be white or black, which is not relevant to decide for the further consideration.

The first random distribution of grain positions can be regarded as randomly drawn from a population of possible distributions. Therefore, the first intensity distribution of the first image 23 can be regarded as randomly drawn from a population of possible intensity distributions.

In the second step S2, radiation pressure is exerted on the powder material 5 by the at least one energy beam 9 along the predetermined scan path 25. Pixels assigned to grains affected by the predetermined scan path are schematically represented at figure 3b) by a dashed region 25' in the shape of a cross. Due to the radiation pressure, positions of individual grains of the powder material 5 along the predetermined scan path 25 are changed, in particular, the grains may be translated and/or rotated. This leads to a change in the light reflection or light scattering properties of the powder material 5 at the sites of the affected grains in the detection region 19, which in turn leads to changes in a detected intensity inside the imaging device 17 for the respective sites of the detection region 19, such as changed intensities for pixels assigned to the affected grains.

For the sake of simplicity, it is just assumed that radiation pressure leads to an inversion of intensity in the dashed region 25', i.e., intensities formerly above the intensity threshold will fall below the intensity threshold, and intensities formerly below the intensity threshold will rise above the intensity should threshold, such that pixels formerly white will turn black, and vice versa.

In reality, the effect of the radiation pressure on the grains along the predetermined scan path is random, such that the positions of the affected grains and thus the intensities at the assigned pixels are randomly changed. It is obvious, that the result is again a random distribution of grain positions and, respectively, intensities. However, even under our course assumption of an intensity inversion in the dashed region 25', the second image 27, schematically reproduced at figure 3c), shows a - second - random intensity distribution, which can be regarded as again randomly drawn from the population distribution. Since the first intensity distribution was random, systematically inverting the intensities in a certain region does not change the random nature of the distribution, but only leads to another member of the population of intensity distributions.

In order to get a deeper understanding, one might consider another example: if one lets 100 people draw lots, each lot showing either win or loss with a probability of 50%, one will gain a first random distribution of individual outcomes over the 100 people. If one now switches the outcome for 10 people from win to loss, and vice versa, one will obtain a second distribution of individual outcomes over the hundred people, which is different from the first distribution, but still random. Indeed, we choose the 10 people systematically, but we do not change the outcome of their lots depending on the result, but just invert each of them, thereby preserving the random nature. The difference between the first distribution in the second distribution and thus the effect of the switching of outcomes only becomes apparent from a comparison of the distributions, not from looking into one of the distributions, in particular the second distribution alone.

In the same way, also the second image 27 only comprises noise, just like the first image 23. It is in no way possible to recognise or otherwise reconstruct the predetermined scan path 25 from the second image 27 taken alone. The predetermined scan path is only revealed in the comparative result 29, i.e., by comparing the second image 27 to the first image 23.

This is schematically shown at figure 3d). The comparison picture 31 is obtained by making all the pixels black for which no difference is present between the second image 27 and the first image 23, and at the same time making all the pixels white for which the intensity is different in the second image 27 from its value in the first image 23. As we, for simplicity's sake, exclude any disturbances due to, e.g., protection gas flow or air circulation, the dashed region 25' is clearly and solely marked white in the comparison image 31 forming the path image 33, such that the predetermined scan path 25 is revealed.

Since the course example of figure 3 may be somewhat misleading in this respect, it shall again be emphasised that the powder grains itself are at least slightly different from each other in shape and size, such that otherwise highly improbable, extreme-low-entropy distributions, where e.g., all powder grains would turn an identical side towards the imaging device 17, can principally be excluded, since there is nothing like an "identical side". Thus, e.g., in reality there is no such distribution where all or a large connected portion of the pixels will be homogeneously white or homogeneously black.

## Claims

1. Method for calibrating at least one beam scanner (11) in a manufacturing device (1) for additively manufacturing an object (3) from a powder material (5), comprising steps:
a) taking a first image (23) of a detection region (19) covered with a powder material (5) in the manufacturing device (1);
b) controlling the at least one beam scanner (11) to scan at least one energy beam (9) along a predetermined scan path (25) in the detection region (19), wherein a first power density of the at least one energy beam (9) is chosen below a modification threshold of the powder material (5), such that the intrinsic physical and chemical properties of the powder material (5) remain unchanged, such that at least one of a translational and an angular position of single grains of the powder material (5) is changed;
c) taking a second image (27) of the detection region (19);
d) comparing the first image (23) and the second image (27) and obtaining a comparative result (29), and
e) calibrating the at least one beam scanner (11) on the basis of the comparative result (29),
wherein the first image (23) and the second image (27) are taken with a resolution in the order of magnitude of an average size of a grain of the powder material (5).

2. Method according to claim 1, wherein in step b) at least one of
- radiation pressure is exerted on the powder material (5) by the at least one energy beam (9),
- the scanning of the at least one energy beam (9) is performed such that a second informational content of the second image (27) equals a first informational content of the first image (23),
- the scanning of the at least one energy beam (9) is performed such that an informational entropy of the powder material (5) in the detection region (19) is maintained, and
- the scanning of the at least one energy beam (9) is performed such that the predetermined scan path (25) is not visible in the second image (27).

3. Method according to any of the preceding claims, wherein the first power density of the at least one energy beam (9) is chosen below 100 W, in particular below 90 W, in particular below 80 W, in particular below 70 W, in particular at 60 W or below 60 W, during step b).

4. Method according to any of the preceding claims, wherein in step b) the at least one beam scanner (11) is controlled to scan the eat least one energy beam (9) along the predetermined scan path (25) with a velocity of at least 5000 mm/s, in particular at least 6000 mm/s, in particular at least 7000 mm/s, in particular 8000 mm/s.

5. Method according to any of the preceding claims, wherein in a step
a0) prior to step a), a new powder layer is formed by distributing the powder material (5) in the detection region (19).

6. Method according to any of the preceding claims, wherein the first image (23) and the second image (27) are compared on a pixel-to-pixel-basis, and an image structure is obtained from the pixels which are different in the second image (27) as compared with the first image (23), and wherein the at least one beam scanner (11) is calibrated on the basis of the obtained image structure.

7. Method according to any of the preceding claims, wherein in step d), the first image (23) and the second image (27) are compared by
- subtracting the first image (23) and the second image (27) from each other, such that a difference image is obtained as the comparative result (29), wherein the at least one beam scanner (11) is calibrated in step e) on the basis of the difference image, or by
- correlating the first image (23) and the second image (27), such that a correlation image is obtained as the comparative result (29), wherein the at least one beam scanner (11) is calibrated in step e) on the basis of the correlation image.

8. Method according to any of the preceding claims, wherein in step b), at least a first beam scanner (11.1) is controlled to scan a first energy beam (9.1) along a first predetermined scan path in the detection region (19), and at least a second beam scanner (11.2) is controlled to scan a second energy beam (9.2) along a second predetermined scan path in the detection region (19), wherein in step e), the first beam scanner (11.1) and the second beam scanner (11.2) are calibrated on the basis of the comparative result (29).

9. Method according to any of the preceding claims, wherein in step e),
- the at least one beam scanner (11) is calibrated with respect to
∘ a detector-coordinate system of an imaging device (17) taking the first image (23) and the second image (27), or
∘ an apparatus-coordinate system of the manufacturing device (1), or
∘ at least one predetermined marker-geometry in at least one of the first image (23) and the second image (27), or
- the at least one first beam scanner (11.1) and the at least one second beam scanner (11.2) are calibrated with respect to each other.

10. Method according to any of the preceding claims, wherein a time duration which elapses between taking the first image (23) and taking the second image (27) is in the order of or less than tens of ms.

11. Method according to any of the preceding claims, wherein in step b), the at least one beam scanner (11) is controlled to scan the at least one energy beam (9) along the predetermined scan path (25) in the detection region (19) outside a working area of the manufacturing device (1).

12. Method for additively manufacturing at least one object (3) from a powder material (5), comprising the following steps: carrying out the method for calibrating at least one beam scanner (11) in a manufacturing device (1) for additively manufacturing the at least one object (3) from the powder material (5) according to any one of claims 1 to 11, and controlling the at least one beam scanner (11) to locally selectively irradiate a working area of the manufacturing device (1) with the at least one energy beam (9), wherein a second power density of the at least one energy beam (9) is chosen above a manufacturing threshold of the powder material (5), thereby manufacturing the at least one object (3).

13. Manufacturing device (1) for additively manufacturing objects (3) from a powder material (5), having
- at least one beam generating device (7) adapted to generate at least one energy beam (9),
- at least one beam scanner (11) adapted to scan at least one energy beam (9) in a scan zone (13) for locally selectively irradiating a working area (15) with the at least one energy beam (9) to produce an object (3) from the powder material (5) arranged in the working area (15),
- an imaging device (17) arranged and adapted to take an image of at least a portion of the scan zone (13),
- a control device (21) operatively connected to the at least one beam scanner (11) and the imaging device (17) and adapted to control the at least one beam scanner (11) and the imaging device (17), wherein
- the control device (21) is adapted to control the imaging device (17) and carry out at least one method, selected from a group consisting of a method according to any of claims 1 to 11, and a method according to claim 12.

## Patentansprüche

1. Verfahren zum Kalibrieren mindestens eines Strahlscanners (11) in einer Fertigungseinrichtung (1) zum additiven Fertigen eines Objekts (3) aus einem Pulvermaterial (5), umfassend die Schritte:
a) Aufnehmen eines ersten Bildes (23) eines mit einem Pulvermaterial (5) bedeckten Erfassungsbereichs (19) in der Fertigungseinrichtung (1);
b) Steuern des mindestens einen Strahlscanners (11) zum Abtasten mindestens eines Energiestrahls (9) entlang eines vorgegebenen Abtastpfades (25) in dem Erfassungsbereich (19), wobei eine erste Leistungsdichte des mindestens einen Energiestrahls (9) unterhalb eines Modifikationsschwellenwerts des Pulvermaterials (5) gewählt ist, sodass die physikalischen und chemischen Eigenschaften des Pulvermaterials (5) unverändert bleiben, sodass mindestens eines einer Translations- und einer Winkelposition einzelner Körner des Pulvermaterials (5) verändert wird;
c) Aufnehmen eines zweiten Bildes (27) des Erfassungsbereichs (19);
d) Vergleichen des ersten Bildes (23) und des zweiten Bildes (27) und Erhalten eines Vergleichsergebnisses (29), und
e) Kalibrieren des mindestens einen Strahlscanners (11) auf der Grundlage des Vergleichsergebnisses (29),
wobei das erste Bild (23) und das zweite Bild (27) mit einer Auflösung in der Größenordnung einer durchschnittlichen Größe eines Kornes des Pulvermaterials (5) aufgenommen werden.

2. Verfahren gemäß Anspruch 1, wobei in Schritt b) mindestens eines erfolgt von
- Ausüben eines Strahlungsdrucks auf das Pulvermaterial (5) durch den mindestens einen Energiestrahl (9),
- Durchführen des Abtastens des mindestens einen Energiestrahls (9), sodass ein zweiter Informationsgehalt des zweiten Bildes (27) einem ersten Informationsgehalt des ersten Bildes (23) entspricht,
- Durchführen des Abtastens des mindestens einen Energiestrahls (9), sodass eine Informationsentropie des Pulvermaterials (5) im Erfassungsbereich (19) erhalten bleibt, und
- Durchführen des Abtastens des mindestens einen Energiestrahls (9), sodass der vorgegebene Abtastpfad (25) im zweiten Bild (27) nicht sichtbar ist.

3. Verfahren gemäß einem der vorhergehenden Ansprüche, wobei die erste Leistungsdichte des mindestens einen Energiestrahls (9) während des Schritts b) unter 100 W, insbesondere unter 90 W, insbesondere unter 80 W, insbesondere unter 70 W, insbesondere bei 60 W oder unter 60 W gewählt wird.

4. Verfahren gemäß einem der vorhergehenden Ansprüche, wobei in Schritt b) der mindestens eine Strahlscanner (11) so gesteuert wird, dass er den mindestens einen Energiestrahl (9) entlang des vorgegebenen Abtastpfades (25) mit einer Geschwindigkeit von mindestens 5000 mm/s, insbesondere mindestens 6000 mm/s, insbesondere mindestens 7000 mm/s, insbesondere 8000 mm/s abtastet.

5. Verfahren gemäß einem der vorhergehenden Ansprüche, wobei in einem Schritt a0) vor Schritt a) eine neue Pulverschicht durch Verteilen des Pulvermaterials (5) im Erfassungsbereich (19) gebildet wird.

6. Verfahren gemäß einem der vorhergehenden Ansprüche, wobei das erste Bild (23) und das zweite Bild (27) auf einer Pixel-zu-Pixel-Basis verglichen werden und eine Bildstruktur aus den Pixeln erhalten wird, die im zweiten Bild (27) im Vergleich zum ersten Bild (23) unterschiedlich sind, und wobei der mindestens eine Strahlscanner (11) auf der Grundlage der erhaltenen Bildstruktur kalibriert wird.

7. Verfahren gemäß einem der vorhergehenden Ansprüche, wobei in Schritt d) das erste Bild (23) und das zweite Bild (27) verglichen werden durch
- Subtrahieren des ersten Bildes (23) und des zweiten Bildes (27) voneinander, sodass ein Differenzbild als Vergleichsergebnis (29) erhalten wird, wobei der mindestens eine Strahlscanner (11) in Schritt e) auf der Grundlage des Differenzbildes kalibriert wird, oder durch
- Korrelieren des ersten Bildes (23) und des zweiten Bildes (27), so dass ein Korrelationsbild als Vergleichsergebnis (29) erhalten wird, wobei der mindestens eine Strahlscanner (11) in Schritt e) auf der Grundlage des Korrelationsbildes kalibriert wird.

8. Verfahren nach einem der vorhergehenden Ansprüche, wobei in Schritt b) mindestens ein erster Strahlscanner (11.1) gesteuert wird, um einen ersten Energiestrahl (9.1) entlang eines ersten vorgegebenen Abtastpfades im Erfassungsbereich (19) abzutasten, und wobei mindestens ein zweiter Strahlscanner (11.2) gesteuert wird, um einen zweiten Energiestrahl (9.2) entlang eines zweiten vorgegebenen Abtastpfades im Erfassungsbereich (19) abzutasten, wobei in Schritt e) der erste Strahlscanner (11.1) und der zweite Strahlscanner (11.2) auf der Grundlage des Vergleichsergebnisses (29) kalibriert werden.

9. Verfahren gemäß einem der vorhergehenden Ansprüche, wobei in Schritt e)
- der mindestens eine Strahlscanner (11) kalibriert wird in Bezug auf
∘ ein Detektorkoordinatensystem einer Bildgebungseinrichtung (17) zum Aufnehmen des ersten Bildes (23) und des zweiten Bildes (27), oder
∘ ein Vorrichtungskoordinatensystem der Fertigungseinrichtung (1), oder
∘ mindestens einer vorgegebenen Markergeometrie in mindestens einem des ersten Bildes (23) und des zweiten Bildes (27), oder
- der mindestens eine erste Strahlscanner (11.1) und der mindestens eine zweite Strahlscanner (11.2) in Bezug aufeinander kalibriert werden.

10. Verfahren gemäß einem der vorhergehenden Ansprüche, wobei eine Zeitdauer, die zwischen dem Aufnehmen des ersten Bildes (23) und dem Aufnehmen des zweiten Bildes (27) vergeht, in der Größenordnung von oder kleiner als zehn ms ist.

11. Verfahren gemäß einem der vorhergehenden Ansprüche, wobei in Schritt b) der mindestens eine Strahlscanner (11) gesteuert wird, um den mindestens einen Energiestrahl (9) entlang des vorgegebenen Abtastpfades (25) im Erfassungsbereich (19) außerhalb eines Arbeitsbereichs der Fertigungseinrichtung (1) abzutasten.

12. Verfahren zum additiven Fertigen mindestens eines Objekts (3) aus einem Pulvermaterial (5), umfassend die folgenden Schritte: Ausführen des Verfahrens zum Kalibrieren mindestens eines Strahlscanners (11) in einer Fertigungseinrichtung (1) zum additiven Fertigen des mindestens einen Objekts (3) aus dem Pulvermaterial (5) gemäß einem der Ansprüche 1 bis 11, und Steuern des mindestens einen Strahlscanners (11) zum örtlich selektiven Bestrahlen eines Arbeitsbereichs der Fertigungseinrichtung (1) mit dem mindestens einen Energiestrahl (9), wobei eine zweite Leistungsdichte des mindestens einen Energiestrahls (9) oberhalb eines Fertigungsschwellenwerts des Pulvermaterials (5) gewählt wird, wodurch das mindestens eine Objekt (3) gefertigt wird.

13. Fertigungseinrichtung (1) zum additiven Fertigen von Objekten (3) aus einem Pulvermaterial (5), mit
- mindestens einer Strahlerzeugungseinrichtung (7), die zum Generieren mindestens eines Energiestrahls (9) angepasst ist,
- mindestens einem Strahlscanner (11), der zum Abtasten mindestens eines Energiestrahls (9) in einer Abtastzone (13) zum lokalen selektiven Bestrahlen eines Arbeitsbereichs (15) mit dem mindestens einen Energiestrahl (9) zum Produzieren eines Objekts (3) aus dem im Arbeitsbereich angeordneten Pulvermaterial (5) angepasst ist
- einer Bildgebungseinrichtung (17), die angeordnet und angepasst ist, um ein Bild von mindestens einem Abschnitt der Abtastzone (13) aufzunehmen,
- einer Steuereinrichtung (21), die funktionsfähig mit dem mindestens einen Strahlscanner (11) und der Bildgebungseinrichtung (17) verbunden und angepasst ist, um den mindestens einen Strahlscanner (11) und die Bildgebungseinrichtung (17) zu steuern, wobei
- die Steuereinrichtung (21) angepasst ist, um die Bildgebungseinrichtung (17) zu steuern und mindestens ein Verfahren auszuführen, das ausgewählt ist aus einer Gruppe bestehend aus einem Verfahren gemäß einem der Ansprüche 1 bis 11 und einem Verfahren gemäß Anspruch 12.

## Revendications

1. Procédé d'étalonnage d'au moins un scanner à faisceau (11) dans un dispositif de fabrication (1) pour la fabrication additive d'un objet (3) à partir d'un matériau pulvérulent (5), comprenant les étapes suivantes :
a) prise d'une première image (23) d'une région de détection (19) recouverte d'un matériau pulvérulent (5) dans le dispositif de fabrication (1) ;
b) contrôle dudit au moins un scanner à faisceau (11) pour balayer au moins un faisceau d'énergie (9) le long d'un chemin de balayage prédéterminé (25) dans la région de détection (19), dans lequel une première densité de puissance dudit au moins un faisceau d'énergie (9) est choisie en dessous d'un seuil de modification du matériau pulvérulent (5) de telle manière que les propriétés physiques et chimiques intrinsèques du matériau pulvérulent (5) restent inchangées, de sorte qu'au moins une position parmi une position de translation et une position angulaire de grains individuels du matériau pulvérulent (5) soit changée ;
c) prise d'une deuxième image (27) de la région de détection (19) ;
d) comparaison de la première image (23) et de la deuxième image (27) et obtention d'un résultat de comparaison (29), et
e) étalonnage dudit au moins un scanner à faisceau (11) sur la base du résultat de comparaison (29),
dans lequel la première image (23) et la deuxième image (27) sont prises avec une résolution de l'ordre de grandeur de la taille moyenne d'un grain du matériau pulvérulent (5).

2. Procédé selon la revendication 1, comprenant à l'étape b) au moins une opération parmi
- l'application d'une pression de rayonnement sur le matériau pulvérulent (5) par ledit au moins un faisceau d'énergie (9),
- le balayage dudit au moins un faisceau d'énergie (9) de telle sorte qu'un deuxième contenu informationnel de la deuxième image (27) soit égal à un premier contenu informationnel de la première image (23),
- le balayage dudit au moins un faisceau d'énergie (9) de telle sorte qu'une entropie informationnelle du matériau pulvérulent (5) dans la région de détection (19) soit maintenue, et
- le balayage dudit au moins un faisceau d'énergie (9) de telle sorte que le chemin de balayage prédéterminé (25) ne soit pas visible dans la deuxième image (27).

3. Procédé selon l'une quelconque des revendications précédentes, dans lequel la première densité de puissance dudit au moins un faisceau d'énergie (9) est choisie de manière à être inférieure à 100 W, en particulier inférieure à 90 W, en particulier inférieure à 80 W, en particulier inférieure à 70 W, en particulier inférieure ou égale à 60 W, à l'étape b).

4. Procédé selon l'une quelconque des revendications précédentes, dans lequel, à l'étape b), ledit au moins un scanner à faisceau (11) est contrôlé pour balayer ledit au moins un faisceau d'énergie (9) le long du chemin de balayage prédéterminé (25) à une vitesse d'au moins 5000 mm/s, en particulier d'au moins 6000 mm/s, en particulier d'au moins 7000 mm/s, en particulier de 8000 mm/s.

5. Procédé selon l'une quelconque des revendications précédentes, dans lequel, à une étape a0) précédant l'étape a), une nouvelle couche de poudre est formée en distribuant le matériau pulvérulent (5) dans la région de détection (19).

6. Procédé selon l'une quelconque des revendications précédentes, dans lequel la première image (23) et la deuxième image (27) sont comparées pixel à pixel, et une structure d'image est obtenue à partir des pixels qui sont différents dans la deuxième image (27) par rapport à la première image (23), et dans lequel ledit au moins un scanner à faisceau (11) est étalonné sur la base de la structure d'image obtenue.

7. Procédé selon l'une quelconque des revendications précédentes, dans lequel, à l'étape d), la première image (23) et la deuxième image (27) sont comparées par
- la soustraction de la première image (23) et de la deuxième image (27) l'une de l'autre, de telle sorte qu'une image de différence soit obtenue comme résultat de comparaison (29), dans lequel ledit au moins un scanner à faisceau (11) est étalonné à l'étape e) sur la base de l'image de différence, ou par
- la corrélation de la première image (23) et de la deuxième image (27), de telle sorte qu'une image de corrélation soit obtenue comme résultat de comparaison (29), dans lequel ledit au moins un scanner à faisceau (11) est étalonné à l'étape e) sur la base de l'image de corrélation.

8. Procédé selon l'une quelconque des revendications précédentes, dans lequel, à l'étape b), au moins un premier scanner à faisceau (11.1) est contrôlé pour balayer un premier faisceau d'énergie (9.1) le long d'un premier chemin de balayage prédéterminé dans la région de détection (19), et au moins un deuxième scanner à faisceau (11.2) est contrôlé pour balayer un deuxième faisceau d'énergie (9.2) le long d'un deuxième chemin de balayage prédéterminé dans la région de détection (19), dans lequel, à l'étape e), le premier scanner à faisceau (11.1) et le deuxième scanner à faisceau (11.2) sont étalonnés sur la base du résultat de comparaison (29).

9. Procédé selon l'une quelconque des revendications précédentes, dans lequel, à l'étape e),
- ledit au moins un scanner à faisceau (11) est étalonné par rapport à
∘ un système de coordonnées de détecteur d'un dispositif d'imagerie (17) qui prend la première image (23) et la deuxième image (27), ou
∘ un système de coordonnées d'appareil du dispositif de fabrication (1), ou
∘ au moins une géométrie de marqueur prédéterminée dans au moins une image parmi la première image (23) et la deuxième image (27), ou
- ledit au moins un premier scanner à faisceau (11.1) et ledit au moins un deuxième scanner à faisceau (11.2) sont étalonnés l'un par rapport à l'autre.

10. Procédé selon l'une quelconque des revendications précédentes, dans lequel la durée qui s'écoule entre la prise de la première image (23) et la prise de la deuxième image (27) est de l'ordre de quelques dizaines de millisecondes ou moins.

11. Procédé selon l'une quelconque des revendications précédentes, dans lequel, à l'étape b), ledit au moins un scanner à faisceau (11) est contrôlé pour balayer ledit au moins un faisceau d'énergie (9) le long du chemin de balayage prédéterminé (25) dans la région de détection (19) à l'extérieur d'une zone de travail du dispositif de fabrication (1).

12. Procédé de fabrication additive d'au moins un objet (3) à partir d'un matériau pulvérulent (5), comprenant les étapes suivantes : mise en œuvre du procédé d'étalonnage d'au moins un scanner à faisceau (11) dans un dispositif de fabrication (1) pour la fabrication additive dudit au moins un objet (3) à partir du matériau pulvérulent (5) selon l'une quelconque des revendications 1 à 11, et contrôle dudit au moins un scanner à faisceau (11) pour irradier localement de manière sélective une zone de travail du dispositif de fabrication (1) avec ledit au moins un faisceau d'énergie (9), dans lequel une deuxième densité de puissance dudit au moins un faisceau d'énergie (9) est choisie au-dessus d'un seuil de fabrication du matériau pulvérulent (5), ce qui permet la fabrication dudit au moins un objet (3).

13. Dispositif de fabrication (1) pour la fabrication additive d'objets (3) à partir d'un matériau pulvérulent (5), comportant
- au moins un dispositif de génération de faisceau (7) adapté pour générer au moins un faisceau d'énergie (9),
- au moins un scanner à faisceau (11) adapté pour balayer au moins un faisceau d'énergie (9) dans une zone de balayage (13) afin d'irradier localement et sélectivement une zone de travail (15) avec ledit au moins un faisceau d'énergie (9) pour produire un objet (3) à partir du matériau pulvérulent (5) agencé dans la zone de travail,
- un dispositif d'imagerie (17) agencé et adapté pour prendre une image d'au moins une portion de la zone de balayage (13),
- un dispositif de contrôle (21) connecté fonctionnellement audit au moins un scanner à faisceau (11) et au dispositif d'imagerie (17), et adapté pour contrôler ledit au moins un scanner à faisceau (11) et le dispositif d'imagerie (17), dans lequel
- le dispositif de contrôle (21) est adapté pour contrôler le dispositif d'imagerie (17) et mettre en œuvre au moins un procédé, sélectionné dans un groupe constitué par un procédé selon l'une quelconque des revendications 1 à 11 et un procédé selon la revendication 12.
